# EUROPÄISCHE PATENTSCHRIFT

(11) **EP 3 582 967 B1**
(45) Veröffentlichungstag und Bekanntmachung des Hinweises auf die Patenterteilung: **09.09.2020**
(21) Anmeldenummer: 18734134.2
(22) Anmeldetag: 15.06.2018
(51) Int. Cl.: B32B 17/10

(54) **VERBUNDGLASSCHEIBE FÜR EIN FAHRZEUG**
LAMINATED GLASS FOR A VEHICLE
VITRAGE FEUILLETE POUR UN VEHICULE

(30) Priorität: 28.06.2017 DE 102017210989
(43) Veröffentlichungstag der Anmeldung: 25.12.2019
(73) Patentinhaber: Audi AG, 85045 Ingolstadt (DE)
(72) Erfinder: REICHARDT, Lars, 85139 Wettstetten (DE)
(86) Internationale Anmeldenummer: PCT/EP2018/065924
(87) Internationale Veröffentlichungsnummer: WO 2019/001988

(56) Entgegenhaltungen:
- EP-A1- 2 878 442
- DE-A1- 3 724 014
- DE-B3- 10 323 557

## Beschreibung

Die vorliegende Erfindung betrifft eine Verbundglasscheibe, insbesondere eine Frontscheibe für ein Kraftfahrzeug, bei dem eine Antennenstruktur für einen Fahrer und einen sich außerhalb des Fahrzeugs aufhaltenden Betrachter optisch nicht wahrnehmbar in die Verbundglasscheibe integriert ist.

Durch eine zunehmende Vernetzung von Fahrzeugen entstehen neue Anforderungen an die drahtlosen Technologien zum Übertragen drahtloser Informationen. Beispielsweise muss eine WLAN-Antenne fahrzeugübergreifend einen Innenraum und einen Fahrzeugaußenraum abdecken können. Insbesondere beim Anbringen einer WLAN-Antenne im Bereich einer Frontscheibe des Fahrzeuges ergeben sich durch die metallischen Beschichtungen der Scheibe Dämpfungen des Übertragungssignals in dem Außenbereich des Fahrzeuges. Im Bereich des Spiegelfußhalters besteht bei Fahrzeugen oftmals eine Aussparung der Metallisierung der Frontscheibe. Hierdurch kann eine in den Spiegelfußhalter eingebrachte Antenne einen Außenbereich des Fahrzeuges abdecken. Es sind verschiedene Möglichkeiten zum Anbringen einer Antenne im Bereich der Frontscheibe eines Fahrzeuges vorgeschlagen worden.

Die DE 103 23 557 B3 offenbart eine Fahrzeugantenne für eine Fahrzeugscheibe, wobei die Scheibe einen Graudruckbereich und einen Schwarzdruckbereich aufweist und die Fahrzeugantenne von außen auf die Fahrzeugscheibe im Graudruckbereich der Fahrzeugscheibe derart angebracht wird, dass sie durch eine mit einer Ausnehmung versehene Fläche des Graudruckbereiches verdeckt wird.

DE 10 2012 010 694 A1 offenbart eine Antennenanordnung für Fahrzeuge mit einem nicht leitenden Scheibenrahmen, bei der die Antennenanordnung durch ein Schwarzdruckraster im Seitenbereich einer Fahrzeugscheibe ausgeführt ist. Die Antenne ist hierbei sichtbar angeordnet. Eine elektrische Verbindungsstelle wird durch einen Schwarzdruckraster verdeckt.

DE 10 2010 039 709 A1 beschreibt ein Antennenmodul für ein Fahrzeug, welches in einem Bereich zwischen einer Frontscheibe und einem Karosserieteil angeordnet ist und dieses als Wärmesenke nutzt.

An den genannten Möglichkeiten ist jedoch eine Beeinträchtigung der Sicht durch die Frontscheibe problematisch. Eine Antenne kann daher beispielsweise in den Spiegelfußhalter integriert werden. Da im Spiegelfußhalter jedoch auch andere Sensoren, wie beispielsweise Infrarotsensoren oder Regensensoren, angeordnet sind, muss der Spiegelfußhalter größer ausgeführt sein. Des Weiteren ist eine direkte Integration einer Antenne in den Spiegelfußhalter problematisch im Hinblick auf die elektromagnetische Verträglichkeit der benachbarten Komponenten im Spiegelfußhalter.

Die EP 2 878 442 A1 betrifft ein wärmeabschirmendes Verbundglaslaminat, bestehend aus mindestens einer Folie A enthaltend ein Polyvinylacetal PA und optional mindestens einen Weichmacher WA und mindestens einer Folie B enthaltend ein Polyvinylacetal PB und mindestens einen Weichmacher WB zwischen zwei Glasscheiben. Vor dem Laminieren weist Folie A einen Anteil von Weichmacher WA von weniger als 16 Gew% und Folie B einen Anteil von Weichmacher WB von mindestens 16 Gew% auf. Folie A weist zudem eine wärmeabschirmende Beschichtung auf.

Aus der DE 37 24 014 A1 ist eine Kraftfahrzeugscheibe mit aufgebrachtem schwarzen Sichtschutzrandstreifen aus einem nichtleitenden Beschichtungsmaterial und mit mindestens einem elektrisch leitenden Element aus einem leitfähigen Beschichtungsmaterial bekannt. Das elektrisch leitende Element ist als Schwarzbeschichtungsleiter aus leitfähigem schwarzem Beschichtungswerkstoff ausgeführt und in den schwarzen Sichtschutzrandstreifen einbezogen, beispielsweise dadurch, dass der Schwarzbeschichtungsleiter und der Sichtschutzrandstreifen nebeneinander angeordnet sind, oder auch dadurch, dass der Schwarzbeschichtungsleiter und der Sichtschutzrandstreifen in Ausnehmungen ineinander angeordnet sind. Der Schwarzbeschichtungsleiter kann auch den Sichtschutzrandstreifen ersetzen.

Aus der DE 198 52 184 A1 geht eine Windschutzscheibe mit einem transparenten Bereich und einem integralen opaken Dachbereich hervor. Der opake Dachbereich enthält mindestens ein Element mit einer elektrischen Funktion, z.B. eine Sende- und / oder Empfangsantenne oder ein Solarzellenelement.

US 2014/266931 A1 lehrt eine Fensteranordnung für ein Fahrzeug mit einem Substrat, das im Wesentlichen transparent ist und eine Oberfläche aufweist. Auf der Oberfläche ist eine transparente Schicht angeordnet, die eine Metallverbindung umfasst, so dass die transparente Schicht elektrisch leitend ist. Zwei getrennte Bereiche der transparenten Schicht sind mit einer Energieversorgung gekoppelt und arbeiten als Antennenelemente.

Der Erfindung liegt die Aufgabe zu Grunde, eine für einen Fahrer nicht sichtbare und im Bereich eines Spiegelfußhalters der Frontscheibe angeordnete Antenne vorzuschlagen.

Ein Gegenstand der vorliegenden Erfindung ist eine Verbundglasscheibe, insbesondere eine Frontscheibe für ein Kraftfahrzeug. Die Verbundglasscheibe weist mindestens zwei Glasschichten, eine zwischen den zwei Glasschichten angeordnete Folie und eine auf der ersten oder der zweiten Glasschicht angeordnete metallische Schicht mit einer Aussparung auf. Des Weiteren weist die Verbundglasscheibe mindestens ein erstes die Aussparung der metallischen Schicht zumindest bereichsweise überdeckendes Schwarzdruckraster auf, wobei die Verbundglasscheibe mindestens eine zwischen den beiden Glasschichten angeordnete Antennenstruktur aufweist und die Antennenstruktur von dem mindestens einen Schwarzdruckraster verdeckt wird.

Hierdurch kann eine Antenne in das bereits vorhandene Schwarzdruckraster einer Frontscheibe eines Fahrzeuges integriert werden. Die Antenne kann beispielsweise eine WLAN- oder eine Bluetooth-Antenne sein. Die Antenne kann auf das Schwarzdruckraster oder auf die Scheibe aufgebracht werden. Dies kann beispielsweise durch Aufkleben oder Aufdrucken realisiert werden. Vorzugsweise ist die Antenne in Form einer elektrisch leitfähigen Schicht ausgeführt und ist in ihrer flächigen Ausbildung dem Schwarzdruckraster angepasst. Hierdurch kann das Schwarzdruckraster die Antennenstruktur zumindest einseitig verdecken, so dass ein Fahrer die Antennenstruktur visuell nicht wahrnehmen kann. Die Antennenstruktur muss somit nicht in einen Spiegelfuß integriert werden, wodurch der Spiegelfuß kleiner ausgeführt werden kann. Insbesondere können durch die erfindungsgemäße Verbundglasscheibe kleinere Fahrzeuge mit einer flächigen Antennenstruktur im Bereich der Windschutzscheibe ausgestattet werden, ohne das Sichtfeld des Fahrers einzuschränken. Die zwischen der ersten und der zweiten Glasschicht angeordnete Folie ist eine Kunststofffolie, wie beispielsweise PVB-Folie, und dient zum mechanischen Verstärken der Verbundglasscheibe. Die metallische Schicht bzw. Beschichtung der Verbundglasscheibe kann beispielsweise eine Antireflexbeschichtung sein und weist im Bereich des Spiegelfußhalters eine Aussparung zum Aufnehmen des Spiegelfußhalters auf. Die Aussparung der metallischen Beschichtung kann eine flächige Ausdehnung entsprechend einer flächigen Ausdehnung des Spiegelfußhalters eines Rückspiegels aufweisen. Das mindestens eine Schwarzdruckraster kann beispielsweise als eine der mindestens einen Antennenstruktur benachbarte Schicht ausgeführt sein. Alternativ oder zusätzlich kann eine Glasschicht und/oder die Folienschicht zwischen der mindestens einen Antennenstruktur und dem mindestens einen Schwarzdruckraster angeordnet sein. Das mindestens eine Schwarzdruckraster kann beidseitig oder einseitig auf eine Glasschicht oder auf die Folie aufgebracht werden. Insbesondere kann das mindestens eine Schwarzdruckraster im Bereich des Spiegelfußhalters der Frontscheibe positioniert sein und die Aussparung freilassen oder teilweise überdecken.

Gemäß einer Ausführungsform der Erfindung sind das Schwarzdruckraster und die Antennenstruktur jeweils als ein Lochraster ausgeführt. Da die Antennenstruktur eine dem Schwarzdruckraster angepasste flächige Form aufweist, kann die Antennenstruktur von dem Schwarzdruckraster vollständig überlagert werden. Hierdurch ist die Antennenstruktur visuell nicht mehr wahrnehmbar. Alternativ kann die Antennenstruktur hierbei kleiner sein als das Schwarzdruckraster und somit durch ein zusätzliches Überlappen des Schwarzdruckraster verdeckt werden. Hierdurch können Fertigungstoleranzen ausgeglichen werden, so dass die Antennenstruktur selbst bei geringfügigen Abweichungen in ihren Abmessungen nicht sichtbar ist.

Nach einer weiteren Ausführungsform der Erfindung weist die Antennenstruktur eine gleiche Farbe wie das Schwarzdruckraster auf. Hierdurch kann die Antennenstruktur auch lediglich einseitig von einem Schwarzdruckraster verdeckt und dennoch beidseitig von einem Schwarzdruckraster nicht unterscheidbar sein. Alternativ kann auch die Antennenstruktur die Funktion des Schwarzdruckrasters übernehmen, so dass ein Schwarzdruckraster zumindest bereichsweise entfallen kann.

Gemäß einer weiteren Ausführungsform der Erfindung kann die Antennenstruktur transparent ausgeführt sein. Insbesondere kann die Antennenstruktur in Form von dünnen Drähten oder einer dünnen Schicht ausgeführt sein. Die Antennenstruktur kann dabei derart fein bzw. dünn ausgeführt sein, dass sie für den Fahrer nicht wahrnehmbar ist.

Nach einer weiteren Ausführungsform der Erfindung ist die Antennenstruktur durch ein zweites Schwarzdruckraster verdeckt. Hierdurch wird die Antennenstruktur beidseitig und unmittelbar von einem jeweiligen Schwarzdruckraster überlagert und beidseitig kaschiert bzw. verdeckt. Die Antennenstruktur kann gemeinsam mit den Schwarzdruckrastern zwischen der ersten und der zweiten Glasschicht oder auf einer Seite der Verbundglasscheibe angeordnet sein. Alternativ kann ein erstes Schwarzdruckraster alleine oder mit der Antennenstruktur zwischen der ersten und der zweiten Glasschicht und das zweite Schwarzdruckraster auf einer äußeren Oberfläche der Verbundglasscheibe angeordnet sein. Mindestens ein Schwarzdruckraster kann hierbei einseitig auf die zwischen den beiden Glasschichten angeordnete Folie aufgebracht sein. Zwischen dem Schwarzdruckraster und der Folie kann die Antennenstruktur positioniert sein. Die Antennenstruktur kann auch auf der dem Schwarzdruckraster gegenüberliegenden Fläche der Folie angeordnet sein.

Nach einer weiteren Ausführungsform der Erfindung ist das zweite Schwarzdruckraster direkt auf die Antennenstruktur aufgebracht. Hierdurch kann die Antennenstruktur bereits im Vorfeld mit dem zweiten Schwarzdruckraster beschichtet oder überlagert werden. Anschließend kann die Antennenstruktur gemeinsam mit dem zweiten Schwarzdruckraster auf die Verbundglasscheibe aufgebracht werden. Hierdurch kann die Montage bzw. Anordnung der Antennenstruktur beschleunigt werden.

Des Weiteren kann das zweite Schwarzdruckraster auf der zwischen der ersten und der zweiten Glasschicht angeordneten Folie aufgebracht sein. Bei der Folie handelt es sich vorzugsweise um eine PVB- Folie zum Reduzieren der Splittergefahr der Verbundglasscheibe. Das zweite Schwarzdruckraster kann hierbei vorzugsweise gemeinsam mit der Antennenstruktur auf die Folie aufgebracht werden. Dies kann im Rahmen eines Fertigungsprozesses der Verbundglasscheibe realisiert sein. Durch eine derartige Anordnung der Schwarzdruckraster und der Antennenstruktur zwischen den Glasschichten, sind die jeweiligen Komponenten der Verbundglasscheibe optimal vor äußeren Einflüssen geschützt.

Gemäß einer weiteren Ausführungsform der Erfindung ist die Antennenstruktur auf eine Oberfläche des mindestens einen Schwarzdruckrasters aufgedruckt. Die Antennenstruktur kann dabei beispielsweise in Form von einer elektrisch leitfähigen Schleife, mehreren voneinander beabstandeten Drähten oder in Form von mindestens einer Fläche ausgeführt sein. Der Verlauf der Antennenstruktur kann dabei beliebig innerhalb des bzw. auf dem Schwarzdruckraster ausgeführt sein. Durch Aufdrucken der Antennenstruktur können auch komplizierte, als Antennenstruktur verwendbare Formen schnell und präzise hergestellt werden. Als Material für die Antennenstruktur kann beispielsweise Silber, Kupfer, Indium-Zinn-Oxid und dergleichen verwendet werden. Alternativ können auch elektrisch leitfähige Folien gestanzt und auf die Verbundglasscheibe appliziert werden. Des Weiteren kann die Antennenstruktur unter Verwendung von Masken auf eine Glasschicht oder auf ein Schwarzdruckraster aufgedampft werden.

Nach einer weiteren Ausführungsform der Erfindung weist die Antennenstruktur eine gleiche Form und gleiche Aussparungen wie das Schwarzdruckraster auf. Hierdurch kann im Vorfeld eine Antennenstruktur in Form eines Lochrasters hergestellt werden und anschließend mit einem Schwarzdruckraster beschichtet werden. Die Form der Antennenstruktur gibt hierbei die Form des Schwarzdruckrasters vor. Somit können die Antennenstruktur und das Schwarzdruckraster technisch einfach realisiert werden.

Gemäß einer weiteren Ausführungsform der Erfindung sind die Antennenstruktur und das mindestens eine Schwarzdruckraster zwischen der ersten und der zweiten Glasschicht angeordnet. Durch diese Maßnahme kann die Antennenstruktur bereits im Rahmen eines Fertigungsprozesses in die Verbundglasscheibe integriert werden. Des Weiteren bilden die beiden Glasschichten schützende Strukturen für die empfindliche Antennenstruktur.

Gemäß einer weiteren Ausführungsform der Erfindung weist die Antennenstruktur Kontaktierungen in Form von Pressungen, Lötungen oder Klebungen auf. Insbesondere können hierdurch Anschlusskabel mit der Antennenstruktur verbunden werden. Die Anschlusskabel können über Verschraubungen oder Steckverbindungen mit weiterer Elektronik des Fahrzeugs elektrisch verbunden sein. Dadurch kann die Antennenstruktur zum Senden und Empfangen von Daten genutzt werden.

Ein weiterer Gegenstand der Erfindung ist ein Verfahren zur Herstellung einer erfindungsgemäßen Verbundglasscheibe. Dabei wird eine erste Glasscheibe bzw. Glasschicht bereitgestellt und mit einem ersten Schwarzdruckraster beaufschlagt. Anschließend wird, beispielsweise thermisch, eine Folie entlang der flächigen Ausdehnung der ersten Glasschicht aufgebracht. Auf die Folie wird eine Antennenstruktur mit einem auf der Antennenstruktur angeordneten Schwarzdruckraster positioniert. Durch eine zweite Glasschicht wird die Verbundglasscheibe fertiggestellt.

Durch das Herstellungsverfahren kann technisch einfach eine großflächige Antennenstruktur in eine Verbundglasscheibe eingebracht werden, die entsprechend ihrer an ein Schwarzdruckraster angepassten Form von einem Fahrer oder von einem Betrachter außerhalb des Fahrzeugs nicht wahrnehmbar ist.

Die Erfindung ist anhand von Ausführungsformen in den Zeichnungen schematisch dargestellt und wird unter Bezugnahme auf die Zeichnungen weiter beschrieben. Es zeigt:
- Figur 1: eine perspektivische Darstellung einer erfindungsgemäßen Verbundglasscheibe im Bereich des Spiegelfußhalters gemäß einer Ausführungsform der Erfindung;
- Figur 2: einen schematischen Querschnitt einer Verbundglasscheibe gemäß einer Ausführungsform der Erfindung;
- Figur 3: einen schematischen Querschnitt einer nicht erfindungsgemäßen Verbundglasscheibe ;
- Figur 4: einen schematischen Querschnitt einer Verbundglasscheibe gemäß einer weiteren Ausführungsform der Erfindung;
- Figur 5: einen schematischen Querschnitt einer Verbundglasscheibe gemäß einer weiteren Ausführungsform der Erfindung;

In den Figuren weisen dieselben konstruktiven Elemente jeweils dieselben Bezugsziffern auf.

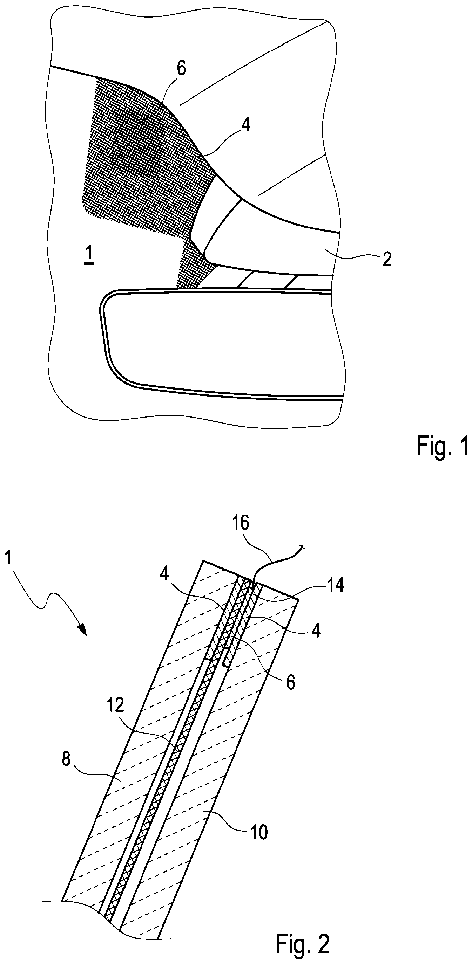

In Figur 1 ist eine perspektivische Darstellung einer erfindungsgemäßen Verbundglasscheibe 1 im Bereich des Spiegelfußhalters 2 gemäß einer ersten Ausführungsform der Erfindung gezeigt. Die Verbundglasscheibe 1 weist im Bereich des Spiegelfußhalters 2 ein Schwarzdruckraster 4 auf. In das Schwarzdruckraster 4 ist eine Antenne 6 bzw. eine Antennenstruktur 6 integriert. In Figur 1 ist die Antenne 6 zum Verdeutlichen hervorgehoben dargestellt. Hierbei kann die Antennenstruktur 6 eine gleiche Form wie das Schwarzdruckraster 4 aufweisen. Durch eine Überlagerung der Antennenstruktur 6 durch das Schwarzdruckraster 4, kann die Antennenstruktur 6 kaschiert bzw. verdeckt werden. Hierdurch ist die im Bereich des Spiegelfußhalters 2 an bzw. in der Verbundglasscheibe 1 angeordnete Antennenstruktur 6 beispielsweise für einen Fahrer nicht wahrnehmbar.

Die Figur 2 zeigt einen schematischen Querschnitt einer Verbundglasscheibe 1 gemäß einer weiteren Ausführungsform der Erfindung. Hierbei ist die Verbundglasscheibe 1 im Bereich des Spiegelfußhalters 2 dargestellt. Gemäß dem Ausführungsbeispiel sind zwischen einer ersten Glasschicht 8 und einer zweiten Glasschicht 10 zwischen zwei Schwarzdruckrastern 4 eine Folie 12 und eine Antennenstruktur 6 angeordnet. Die Folie 12 dient zum mechanischen Verstärken der Verbundglasscheibe 1. Die Antennenstruktur 6 wird hier beidseitig von jeweils einem Schwarzdruckraster 4 überdeckt. Zum elektrischen Anbinden der Antennenstruktur 6 an eine elektrische Verbindung bzw. Leitung 16 weist die Antennenstruktur 6 mindestens eine Kontaktstelle 14 auf. Gemäß dem Ausführungsbeispiel sind die Schwarzdruckraster 4 und die Antennenstruktur 6 durch die erste Glasschicht 8 und die zweite Glasschicht 10 beidseitig geschützt.

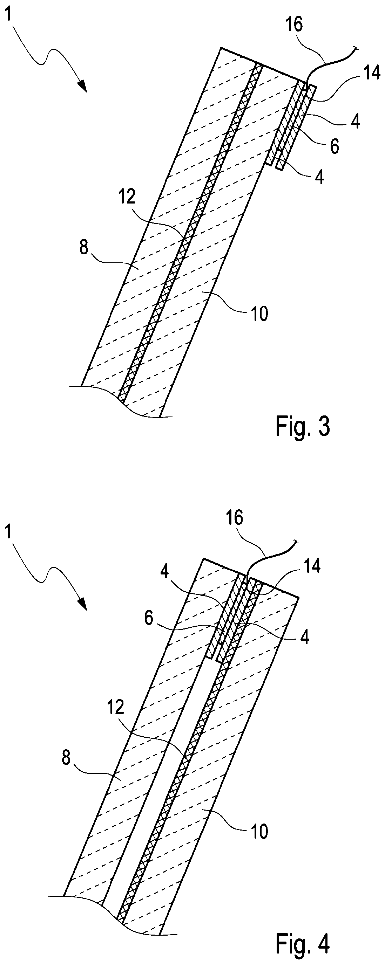

In Figur 3 ist ein schematischer Querschnitt einer nicht erfindungsgemäßen Verbundglasscheibe 1 dargestellt. Im Unterschied zu der bereits gezeigten Verbundglasscheibe 1 in Figur 2, ist die Antennenstruktur 6 mit den beidseitig um die Antennenstruktur 6 angeordneten Schwarzdruckrastern 4 nicht zwischen den beiden Glasschichten 8, 10 sondern an einer äußeren Fläche der zweiten Glasschicht 10 positioniert. Hierdurch kann eine übliche Verbundglasscheibe nachträglich mit einer durch Schwarzdruckraster 4 beidseitig kaschierten Antennenstruktur 6 ausgestattet werden.

Die Figur 4 stellt einen schematischen Querschnitt einer Verbundglasscheibe 1 gemäß einer weiteren Ausführungsform der Erfindung dar. Im Unterschied zu den bereits gezeigten Ausführungsformen der Verbundglasscheibe 1, ist hier die beidseitig durch jeweils ein Schwarzdruckraster 4 verdeckte Antennenstruktur 6 zwischen der ersten Glasschicht 8 und der Folie 12 angeordnet. Hierbei können im Rahmen eines Herstellungsverfahrens der Verbundglasscheibe 1 die jeweiligen Schwarzdruckraster 4 und die Antennenstruktur 6 zwischen der ersten Glasschicht 8 und der zweiten Glasschicht 10 angeordnet werden.

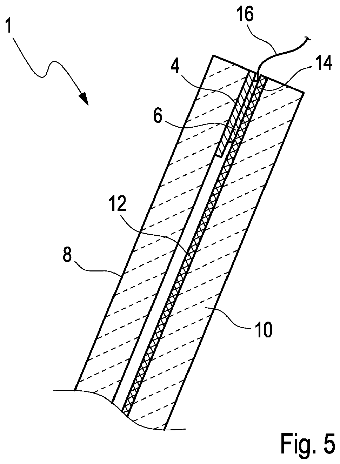

In der Figur 5 ist ein schematischer Querschnitt einer Verbundglasscheibe 1 gemäß einer weiteren Ausführungsform der Erfindung gezeigt. Im Unterschied zu der in der Figur 4 gezeigten Ausführungsform der Verbundglasscheibe 1, ist hier die Antennenstruktur 6 nur einseitig von einem Schwarzdruckraster 4 verdeckt. Die Antennenstruktur 6 ist hier mit einer Farbe des Schwarzdruckrasters 4 eingefärbt, so dass die Antennenstruktur 6 trotz einseitiger Kaschierung durch ein Schwarzdruckraster 4 beidseitig nicht wahrnehmbar ist.

### Bezugszeichenliste

- 1: Verbundglasscheibe
- 2: Spiegelfußhalter
- 4: Schwarzdruckraster
- 6: Antennenstruktur
- 8: erste Glasschicht
- 10: zweite Glasschicht
- 12: Folie
- 14: Kontaktstelle
- 16: elektrische Verbindung der Antennenstruktur

## Patentansprüche

1. Verbundglasscheibe (1), insbesondere eine Frontscheibe (1) für ein Kraftfahrzeug, aufweisend mindestens zwei Glasschichten (8, 10), eine zwischen den zwei Glasschichten (8, 10) angeordnete Folie (12), eine auf der ersten oder der zweiten Glasschicht (8, 10) angeordnete metallische Schicht, wobei die metallische Schicht eine Aussparung aufweist, und mindestens ein die Aussparung der metallischen Schicht zumindest bereichsweise überdeckendes erstes Schwarzdruckraster (4), wobei die Verbundglasscheibe (1) mindestens eine zwischen den beiden Glasschichten (8, 10) angeordnete Antennenstruktur (6) aufweist und die Antennenstruktur (6) von dem mindestens einen Schwarzdruckraster (4) verdeckt wird.

2. Verbundglasscheibe nach Anspruch 1, wobei das mindestens eine erste Schwarzdruckraster (4) und die mindestens eine Antennenstruktur (6) jeweils als ein Lochraster ausgeführt sind.

3. Verbundglasscheibe nach Anspruch 1 oder 2, wobei die mindestens eine Antennenstruktur (6) eine gleiche Farbe wie das mindestens eine erste Schwarzdruckraster (4) aufweist.

4. Verbundglasscheibe nach einem der Ansprüche 1 bis 3, wobei die mindestens eine Antennenstruktur (6) transparent ausgeführt ist.

5. Verbundglasscheibe nach einem der Ansprüche 1 bis 4, wobei die mindestens eine Antennenstruktur (6) durch mindestens ein zweites Schwarzdruckraster (4) zusätzlich verdeckt ist.

6. Verbundglasscheibe nach Anspruch 5, wobei das mindestens eine zweite Schwarzdruckraster (4) direkt auf die mindestens eine Antennenstruktur (6) aufgebracht ist.

7. Verbundglasscheibe nach Anspruch 5, wobei das mindestens eine zweite Schwarzdruckraster (6) auf einer zwischen der ersten und der zweiten Glasschicht (8, 10) angeordneten Folie (12) aufgebracht ist.

8. Verbundglasscheibe nach einem der Ansprüche 1 bis 7, wobei die mindestens eine Antennenstruktur (6) auf eine Oberfläche des mindestens einen ersten Schwarzdruckrasters (4) aufgedruckt ist.

9. Verbundglasscheibe nach einem der Ansprüche 1 bis 8, wobei mindestens eine Antennenstruktur (6) eine gleiche Form und gleiche Aussparungen wie das mindestens eine erste Schwarzdruckraster (4) aufweist.

10. Verbundglasscheibe nach einem der Ansprüche 1 bis 9, wobei die mindestens eine Antennenstruktur (6) Kontaktierungen (14) über Pressungen, Lötungen und/oder Klebungen aufweist.

11. Verfahren zur Herstellung einer Verbundglasscheibe (1) nach einem der Ansprüche 1 bis 10, worin eine erste Glasschicht (8) bereitgestellt und mit einem ersten Schwarzdruckraster (4) beaufschlagt wird, anschließend eine Folie (12) entlang der flächigen Ausdehnung der ersten Glasschicht (8) aufgebracht und auf die Folie (12) eine Antennenstruktur (6) mit einem auf der Antennenstruktur (6) angeordneten zweiten Schwarzdruckraster (4) positioniert wird, und die Verbundglasscheibe (1) durch eine zweite Glasschicht (10) fertiggestellt wird.

## Claims

1. Laminated glass pane (1), in particular a front pane (1) for a motor vehicle, comprising at least two glass layers (8, 10), a film (12) arranged between the two glass layers (8, 10), a metallic layer arranged on the first or the second glass layer (8, 10), wherein the metallic layer has a recess, and at least one first black printing raster (4) covering the recess of the metallic layer at least in regions, wherein the laminated glass pane (1) has at least one antenna structure (6) arranged between the two glass layers (8, 10), and the antenna structure (6) is covered by the at least one black printing raster (4).

2. Laminated glass pane according to claim 1, wherein the at least one first black printing raster (4) and the at least one antenna structure (6) are respectively designed as a pinhole raster.

3. Laminated glass pane according to claim 1 or 2, wherein the at least one antenna structure (6) has the same colour as the at least one first black printing raster (4).

4. Laminated glass pane according to any one of claims 1 to 3, wherein the at least one antenna structure (6) is transparent.

5. Laminated glass pane according to any one of claims 1 to 4, wherein the at least one antenna structure (6) is additionally covered by at least one second black printing raster (4).

6. Laminated glass pane according to claim 5, wherein the at least one second black printing raster (4) is applied directly to the at least one antenna structure (6).

7. Laminated glass pane according to claim 5, wherein the at least one second black printing raster (6) is applied to a film (12) arranged between the first and the second glass layer (8, 10).

8. Laminated glass pane according to any one of claims 1 to 7, wherein the at least one antenna structure (6) is printed on a surface of the at least one first black printing raster (4).

9. Laminated glass pane according to any one of claims 1 to 8, wherein at least one antenna structure (6) has the same shape and the same recesses as the at least one first black printing raster (4).

10. Laminated glass pane according to any one of claims 1 to 9, wherein the at least one antenna structure (6) has contacts (14) via pressings, solderings and/or bonds.

11. Method for producing a laminated glass pane (1) according to any one of claims 1 to 10, wherein a first glass layer (8) is provided and is applied with a first black printing raster (4), then a film (12) is applied along the planar extent of the first glass layer (8) and an antenna structure (6) with a second black printing raster (4) arranged on the antenna structure (6) is positioned on the film (12), and the laminated glass pane (1) is completed by a second glass layer (10).

## Revendications

1. Vitre en verre feuilleté (1), en particulier un pare-brise (1) pour un véhicule automobile, présentant au moins deux couches de verre (8, 10), un film (12) disposé entre les deux couches de verre (8, 10), une couche métallique disposée sur la première ou la seconde couche de verre (8, 10), la couche métallique présentant un évidement, et au moins une première trame d'impression noire (4) recouvrant au moins par endroits l'évidement de la couche métallique, la vitre en verre feuilleté (1) présentant au moins une structure d'antenne (6) disposée entre les deux couches de verre (8, 10) et la structure d'antenne (6) étant recouverte par l'au moins une trame d'impression noire (4).

2. Vitre en verre feuilleté selon la revendication 1, dans laquelle l'au moins une première trame d'impression noire (4) et l'au moins une structure d'antenne (6) sont chacune conçues comme une trame perforée.

3. Vitre en verre feuilleté selon la revendication 1 ou 2, dans laquelle l'au moins une structure d'antenne (6) présente une même couleur que l'au moins une première trame d'impression noire (4).

4. Vitre en verre feuilleté selon l'une quelconque des revendications 1 à 3, dans laquelle l'au moins une structure d'antenne (6) est transparente.

5. Vitre en verre feuilleté selon l'une quelconque des revendications 1 à 4, dans laquelle l'au moins une structure d'antenne (6) est en outre recouverte par au moins une seconde trame d'impression noire (4).

6. Vitre en verre feuilleté selon la revendication 5, dans laquelle l'au moins une seconde trame d'impression noire (4) est appliquée directement sur l'au moins une structure d'antenne (6).

7. Vitre en verre feuilleté selon la revendication 5, dans laquelle l'au moins une seconde trame d'impression noire (6) est appliquée sur un film (12) disposé entre la première et la seconde couche de verre (8, 10).

8. Vitre en verre feuilleté selon l'une quelconque des revendications 1 à 7, dans laquelle l'au moins une structure d'antenne (6) est imprimée sur une surface de l'au moins une première trame d'impression noire (4).

9. Vitre en verre feuilleté selon l'une quelconque des revendications 1 à 8, dans laquelle au moins une structure d'antenne (6) présente la même forme et les mêmes évidements que l'au moins une première trame d'impression noire (4).

10. Vitre en verre feuilleté selon l'une quelconque des revendications 1 à 9, dans laquelle l'au moins une structure d'antenne (6) présente des interconnexions (14) par l'intermédiaire de pressages, brasages et/ou collages.

11. Procédé de fabrication d'une vitre en verre feuilleté (1) selon l'une quelconque des revendications 1 à 10, dans lequel une première couche de verre (8) est prévue et une première trame d'impression noire (4) est appliquée sur celle-ci, puis un film (12) est appliqué le long de l'étendue en surface de la première couche de verre (8) et une structure d'antenne (6) avec une seconde trame d'impression noire (4) disposée sur la structure d'antenne (6) est positionnée sur le film (12), et la vitre en verre feuilleté (1) est complétée par une seconde couche de verre (10).
